# EUROPÄISCHE PATENTSCHRIFT

(11) **EP 1 024 981 B1**
(45) Veröffentlichungstag und Bekanntmachung des Hinweises auf die Patenterteilung: **02.05.2002**
(21) Anmeldenummer: 98954458.0
(22) Anmeldetag: 28.10.1998
(51) Int. Cl.: B60R 22/46, F16D 41/12

(54) **KUPPLUNG FÜR EINEN GURTSTRAFFER MIT DREHANTRIEB**
BELT TENSIONER COUPLING WITH A ROTARY DRIVE UNIT
ACCOUPLEMENT POUR TENDEUR DE COURROIE AVEC ENTRAINEMENT EN ROTATION

(30) Priorität: 28.10.1997 DE 29719143 U
(43) Veröffentlichungstag der Anmeldung: 09.08.2000
(73) Patentinhaber: FÖHL, Artur, 73614 Schorndorf (DE)
(72) Erfinder: FÖHL, Artur, 73614 Schorndorf (DE)
(74) Vertreter: Degwert, Hartmut, Dipl.-Phys.
(86) Internationale Anmeldenummer: EP9806838
(87) Internationale Veröffentlichungsnummer: WO9921740

(56) Entgegenhaltungen:
- EP-A- 0 737 606
- DE-C- 375 047
- GB-A- 793 920
- US-A- 2 226 247

## Beschreibung

Die Erfindung betrifft eine Kupplung zwischen dem Rotor eines Gurtstraffer-Drehantriebs und einer Antriebswelle.

Eine Kupplung dieser Art ist aus dem gattungsbildenden deutschen Gebrauchsmuster 295 15 703.8 bekannt. Die mit der Gurtspule eines Gurtaufrollers gekoppelte Antriebswelle trägt ein außenverzahntes Kupplungsrad, in dessen Verzahnung zwei am Rotor schwenkbar gelagerte Kupplungsklinken einsteuerbar sind. Die Kupplungsklinken sind an ihrem der Klinkenspitze gegenüberliegenden Ende ballig ausgebildet und auf einer entsprechend konkav geformten Stützfläche in einer Lagertasche am Rotor großflächig abgestützt, um die beim Kupplungsvorgang auftretenden extrem hohen Belastungen sowohl in Radialrichtung als auch in Umfangsrichtung auf eine große Stützfläche zu verteilen.

Die deutsche Patentschrift Nr. 375047 zeigt ein Klinkenschaltwerk für Motorwagen, bei dem die kippbeweglich an einer Ringscheibe gelagerten Schaltklinken unter Einwirkung der Fliehkraft mit einem Schaltrad in Eingriff treten.

Die Erfindung bezweckt eine Weiterbildung der aus dem vorgenannten deutschen Gebrauchsmuster 295 15 703.8 bekannten Kupplung dahingehend, daß der Kupplungsvorgang beschleunigt wird und schon zu Beginn der Rotordrehung abgeschlossen ist. Gemäß der Erfindung ist die Kupplungsklinke auf einer Lagerkante kippbeweglich am Rotor gelagert und der Schwerpunkt der Kupplungsklinke relativ zur Lagerkante so gewählt, daß zu Beginn der Drehung des Rotors die Kupplungsklinke durch Massenträgheit in die Eingriffsstellung ausgelenkt wird. Die Erfindung beruht auf der Erkenntnis, daß die für die Lastverteilung beim Kupplungsvorgang günstige, großflächige Anlage zwischen Kupplungsklinke und Stützfläche zu erhöhter Reibung führt, die den Kupplungsvorgang verzögert. Bei Lagerung der Kupplungsklinke auf einer Lagerkante ist die Reibung vernachlässigbar, so daß keine Verzögerung des Kupplungsvorgangs erfolgt. Trotz der Lagerung der Kupplungsklinke auf einer Lagerkante wird letztlich eine Verteilung der Lasten auf eine große Stützfläche erreicht. Zum einen kann nämlich die Kupplungsklinke, wenn sie ihre Eingriffsstellung erreicht hat, großflächig an der Stützfläche anliegen. Zum anderen kann die insbesondere durch einen spitzen Vorsprung gebildete Lagerkante unter der Last verformt werden, so daß die Klinke auf ihrer von der Klinkenspitze abgewandten Seite an der Stützfläche zur Anlage kommt. Die plastische Deformierung im Bereich der Lagerkante ist ein erwünschter Effekt, durch den die Bewegung der Kupplungsklinke beim Kontakt mit der Verzahnung des Kupplungsrades bedämpft wird. Der Dämpfungseffekt wird bei der bevorzugten Ausführungsform durch mehrere zusätzliche Deformierungselemente an der Stützfläche verstärkt.

Weitere Vorteile und Merkmale der Erfindung ergeben sich aus der folgenden Beschreibung mehrerer Ausführungsformen und aus der Zeichnung, auf die Bezug genommen wird. In der Zeichnung zeigen:

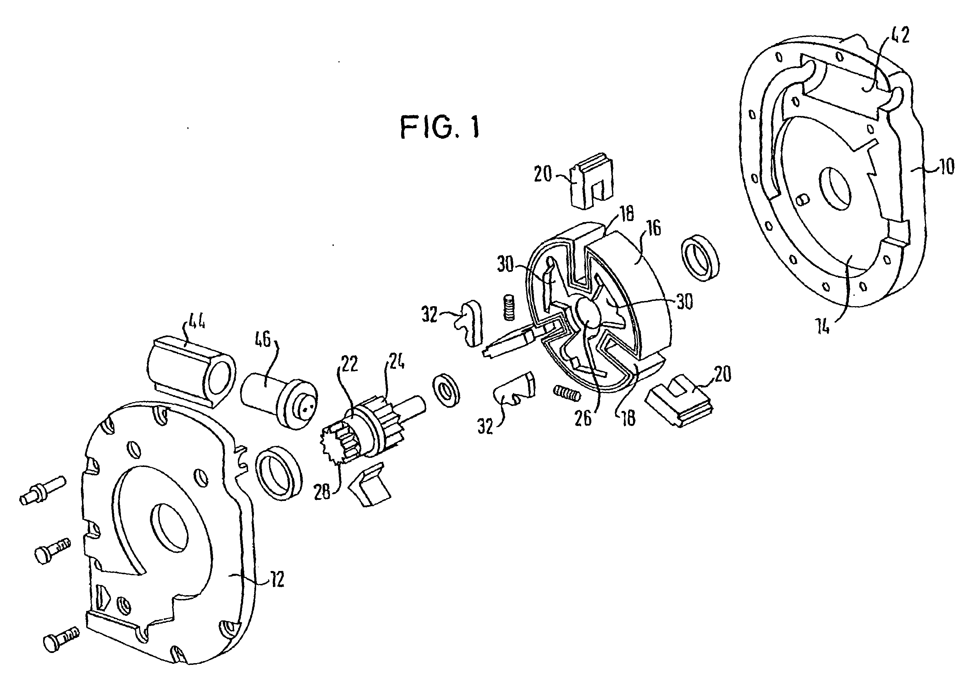

- Figur 1 eine Explosionsansicht eines Gurtstraffer-Drehantriebs mit Kupplung;
- Figur 2 einen axialen Schnitt des in Figur 1 ersichtlichen Rotors;
- Figur 3a eine Detailansicht der Kupplung im vergrößerten Maßstab und im ausgerückten Zustand;
- Figur 3b die Kupplung im eingerückten Zustand;
- Figur 4a und 4b eine Ausführungsvariante der Kupplung im ausgerückten und im eingerückten Zustand;
- Figuren 5 bis 7 drei Ausführungsvarianten der Kupplung jeweils im eingerückten Zustand.

Die Kupplung ist bei der beschriebenen Ausführungsform in einem Gurtstraffer-Drehantrieb verwirklicht, der seitlich an einen Gurtaufroller angesetzt wird. In einem durch einen Hauptkörper 10 und eine Deckelplatte 12 gebildeten Gehäuse ist eine Arbeitskammer 14 zur Aufnahme eines Rotors 16 ausgebildet. Der Rotor 16 weist drei radiale Schlitze 18 auf, in denen jeweils eine Lamelle 20 aufgenommen ist.

Eine Antriebswelle 22, die ein außenverzahntes Kupplungsrad 24 trägt, ist in einer axialen Bohrung 26 des Rotors 16 drehbar aufgenommen. An einem Ende weist die Antriebswelle 22 eine Keil-, Vielnut-, oder Polygonverzahnung 28 oder dergleichen zur drehfesten Kopplung mit einer (nicht gezeigten) Gurtspule auf.

In einer Seitenfläche des Rotors 16 sind mehrere Lagertaschen 30 zur Aufnahme einer Kupplungsklinke 32 gebildet. Bei der gezeigten Ausführungsform sind drei Lagertaschen 30 vorgesehen, von denen wenigstens zwei eine Kupplungsklinke 32 aufnehmen.

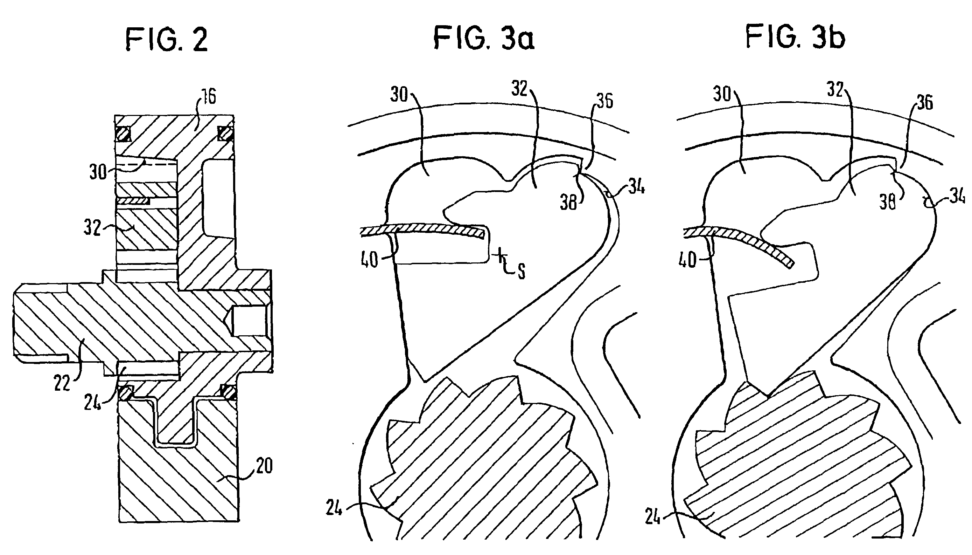

Wie aus Figur 3a und 3b ersichtlich ist, weist die Lagertasche 30 eine Stützfläche 34 auf, an der durch einen spitzen Vorsprung 36 eine Lagerkante gebildet ist. Diese Lagerkante greift in eine entsprechende Kerbe 38 der Kupplungsklinke 32 ein. Die Kupplungsklinke 32 ist somit kippbeweglich auf der Stützfläche 34 gelagert. Bei der in Figur 3a gezeigten Ruhestellung wird die Kupplungsklinke 32 durch eine Rückstellfeder 40 mit einer ihrer Klinkenspitze benachbarten Abflachung in Anlage an der Stützfläche 34 der Lagertasche 30 gehalten. Die Klinkenspitze befindet sich so in einem definierten Abstand vom Umfang des Kupplungsrades 24. Der Schwerpunkt S der Kupplungsklinke 32 ist relativ zur Lagerkante so gewählt, daß bei Drehung des Rotors 16 die Kupplungsklinke 32 durch Massenträgheit ausgelenkt und in die Außenverzahnung am Umfang des Kupplungsrades 24 eingesteuert wird.

Durch zwei einander gegenüberliegende Aussparungen im Hauptkörper 10 und in der Deckelplatte 12 ist ein Aufnahmeraum 42 für eine Hülse 44 gebildet, in die eine Gasgenerator-Kapsel 46 eingesetzt ist. Bei Aktivierung der Gasgenerator-Kapsel 46 werden Druckgase freigesetzt, die den Rotor 16 beaufschlagen und in Drehung versetzen.

Da die Gurtstraffung innerhalb von wenigen Millisekunden abgeschlossen sein muß, erfährt der Rotor 16 zu Beginn seiner Drehung eine extrem hohe Drehbeschleunigung. Entsprechend hoch sind die Trägheitskräfte, die eine Auslenkung der Kupplungsklinken 32 in Richtung des Kupplungsrades 24 verursachen. Diese Kräfte werden von der Lagerung der Kupplungsklinken abgestützt. Da beide Kupplungsklinken 32 auf einer Lagerkante gelagert sind, sind die Reibungskräfte aber vernachlässigbar. Die Eingriffsbewegung der Kupplungsklinken 32 wird daher nicht durch Reibungseinflüsse verzögert.

Figur 3b zeigt eine Kupplungsklinke 32 im eingerückten Zustand, bei welchem die Klinkenspitze formschlüssig in die Außenverzahnung des Kupplungsrades 24 eingreift. In diesem Zustand erfolgt eine großflächige Anlage des balligen Endes der Kupplungsklinke 32 an der entsprechend konkav geformten Stützfläche 34.

Die Kupplungsklinken 32 sind in Umfangsrichtung des Rotors 16 in solcher Weise gegeneinander versetzt, daß im Falle des Auftreffens der Klinkenspitze einer Kupplungsklinke auf der Spitze eines Zahnes am Umfang des Kupplungsrades 24 die Klinkenspitze einer anderen Kupplungsklinke in die Zahnlücke zwischen zwei aufeinanderfolgenden Zähnen des Kupplungsrades 24 trifft.

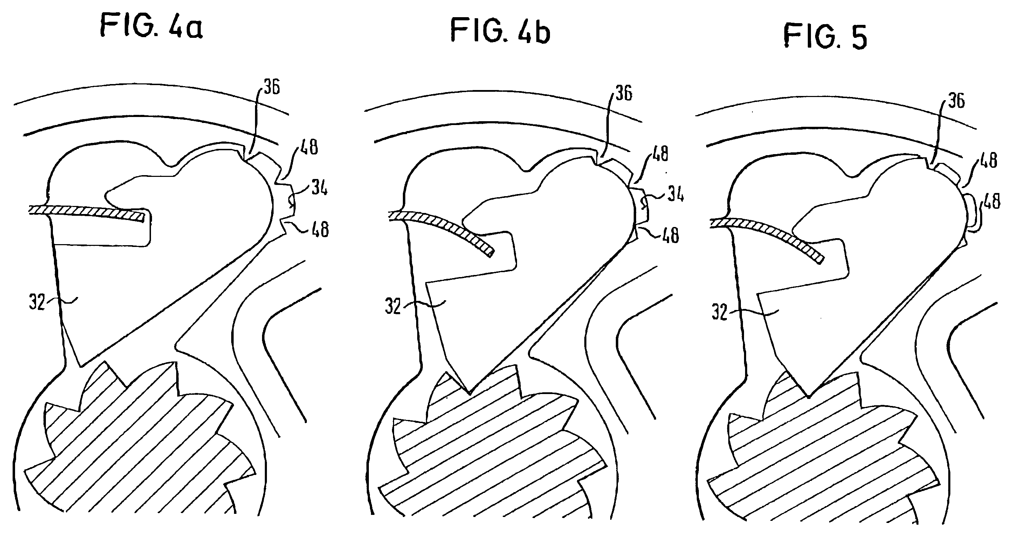

Bei der in den Figuren 4a und 4b gezeigten Ausführungsform sind Mittel vorgesehen, um die Bewegung der Kupplungsklinke 32 beim Kontakt mit der Außenverzahnung des Kupplungsrades 24 zu bedämpfen. Durch eine solche Bedämpfung wird das Abprellen der Kupplungsklinke vom Kupplungsrad während des Kupplungsvorgangs weitgehend verhindert, wodurch eine weitere Beschleunigung des Kupplungsvorgangs erreicht wird. Neben dem die Lagerkante bildenden spitzen Vorsprung 36 und in Drehrichtung des Rotors hinter der Lagerkante sind zwei Deformierungselemente angeordnet, die durch je einen spitzen Vorsprung 48 an der Stützfläche 34 gebildet sind. Wie aus Figur 4b ersichtlich ist, befindet sich die Kupplungsklinke 32 im eingerückten Zustand mit ihrem ballig verrundeten Ende in Anlage an den Spitzen der Vorsprünge 36 und 48. Da die an die Antriebswelle 22 angeschlossene Gurtspule mit dem darauf aufgewickelten Gurtband der beginnenden Drehbewegung ihre Massenträgheit entgegensetzt, wirkt auf die Kupplungsklinke 32 eine hohe Last sowohl in Radialrichtung als auch in Umfangsrichtung. Diese Last wird von der Stützfläche 34 über die spitzen Vorsprünge 36 und 48 aufgenommen. Dabei tritt eine plastische Deformierung dieser Vorsprünge 36 und 48 auf, wodurch die erwünschte Bedämpfung erzielt wird.

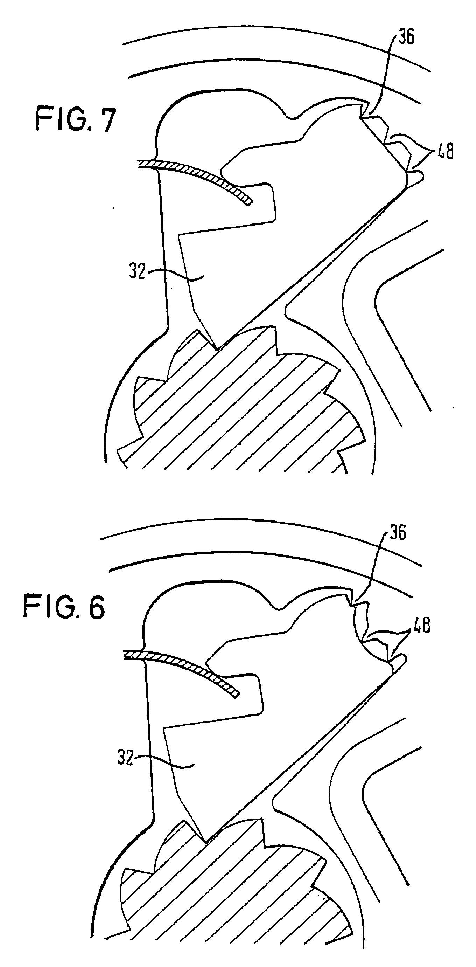

Die in den Figuren 5 bis 7 gezeigten Ausführungsvarianten unterscheiden sich von der Ausführungsform nach den Figuren 4a und 4b nur durch die Form und Anordnung der spitzen Vorsprünge, welche die Lagerkante und die Deformierungselemente bilden sowie durch entsprechende Formanpassung der Kupplungsklinken unter Belastung. In Figur 5 sind deshalb die Vorsprünge weniger spitz ausgebildet. In Figur 6 ist das auf den spitzen Vorsprüngen abgestützte Ende der Kupplungsklinke 32 nicht ballig konvex, sondern konkav. In Figur 7 liegen die Spitzen der Vorsprünge in einer Ebene, und das abgestützte Ende der Kupplungsklinke 32 ist entsprechend eben.

## Patentansprüche

1. Kupplung zwischen dem Rotor (16) eines Gurtstraffer-Drehantriebs und einer Antriebswelle (22), mit einem an die Antriebswelle (22) angeschlossenen außenverzahnten Kupplungsrad (24) und wenigstens einer am Rotor (16) angeordneten Kupplungsklinke (32), die zwischen einer Ruhestellung, in der sie sich vom Umfang des Kupplungsrades im Abstand befindet, und einer Eingriffsstellung beweglich ist, in der sie in das Kupplungsrad eingreift, **dadurch gekennzeichnet, daß** die Kupplungsklinke (32) auf einer Lagerkante (36) kippbeweglich am Rotor (16) gelagert ist und der Schwerpunkt (S) der Kupplungsklinke (32) relativ zur Lagerkante (36) so gewählt ist, daß zu Beginn der Drehung des Rotors (16) die Kupplungsklinke (32) durch Massenträgheit in die Eingriffsstellung ausgelenkt wird.

2. Kupplung nach Anspruch 1, **dadurch gekennzeichnet, daß** die Lagerkante (36) in einer die Kupplungsklinke (32) aufnehmenden Lagertasche (30) am Rotor (16) gebildet ist.

3. Kupplung nach Anspruch 1 oder 2, **dadurch gekennzeichnet, daß** die Kupplungsklinke (32) an ihrem von der Klinkenspitze abgewandten Ende eine Kerbe (38) aufweist, in welche die Lagerkante (36) eingreift.

4. Kupplung nach Anspruch 2 oder 3, **dadurch gekennzeichnet, daß** die Lagertasche (30) Stützflächen (34) aufweist, an denen die Kupplungsklinke (32) in ihrer Eingriffsstellung abgestützt ist.

5. Kupplung nach Anspruch 4, **dadurch gekennzeichnet, daß** die Stützflächen (34) sowohl radiale als auch periphere Lastkomponenten aufnehmen.

6. Kupplung nach Anspruch 4 oder 5, **dadurch gekennzeichnet, daß** an der Stützfläche (34) wenigstens ein die Bewegung der Kupplungsklinke (32) beim Kontakt mit dem Kupplungsrad (24) bedämpfendes Deformierungselement (48) angeordnet ist.

7. Kupplung nach Anspruch 6, **dadurch gekennzeichnet, daß** das Deformierungselement durch einen spitzen Vorsprung (48) an der Stützfläche (34) gebildet ist.

8. Kupplung nach Anspruch 6 oder 7, **dadurch gekennzeichnet, daß** mehrere Deformierungselemente (48) im Abstand voneinander an der Stützfläche (34) in Drehrichtung des Rotors (16) hinter der Lagerkante (36) angeordnet sind.

## Claims

1. A coupling between the rotor (16) of a belt tensioner rotary drive and a drive shaft (22), including an externally toothed coupling wheel (24) connected to said drive shaft (22) and at least one coupling pawl (32) which is arranged on said rotor (16) and is movable between a resting position in which it is located spaced away from the periphery of said coupling wheel and an engaging position in which it engages said coupling wheel, **characterized in that** said coupling pawl (32) is toggle-mounted on a knife-edge bearing (36) on said rotor (16) and the center of gravity (S) of said coupling pawl (32) relative to said knife-edge bearing (36) is selected such that on commencement of rotation of said rotor (16) said coupling pawl (32) is deflected by mass inertia into the engaging position.

2. The coupling as set forth in claim 1, **characterized in that** said knife-edge bearing (36) is formed in a bearing pocket (30) accommodating said coupling pawl (32) on said rotor (16).

3. The coupling as set forth in claim 1 or 2, **characterized in that** said coupling pawl (32) comprises at its end facing away from the pawl tip a notch (38) in which said knife-edge bearing (36) engages.

4. The coupling as set forth in claim 2 or 3, **characterized in that** said bearing pocket (30) comprises supporting surfaces (34) supporting said coupling pawl (32) in its engaging position.

5. The coupling as set forth in claim 4, **characterized in that** said supporting surfaces (34) absorb both radial and peripheral load components.

6. The coupling as set forth in claim 4 or 5, **characterized in that** at least one deformation element (48) damping the movement of said coupling pawl (32) in contacting said coupling wheel (24) is arranged on said supporting surface (34).

7. The coupling as set forth in claim 6, **characterized in that** said deformation element is formed by a pointed projection (48) on said supporting surface (34).

8. The coupling as set forth in claim 6 or 7, **characterized in that** a plurality of deformation elements (48) is arranged spaced away from each other on said supporting surface (34) in the direction of rotation of said rotor (16) behind said knife-edge bearing (36).

## Revendications

1. Accouplement entre le rotor (16) d'un entraînement rotatif de tendeur de ceinture et un arbre moteur (22), comprenant une roue d'accouplement (24) à denture externe connectée à l'arbre moteur (22) et au moins un cliquet d'accouplement (32) agencé sur le rotor (16), lequel est mobile entre une position de repos, dans laquelle il se trouve à distance de la périphérie de la roue d'accouplement, et une position d'engagement dans laquelle il s'engage dans la roue d'accouplement, **caractérisé en ce que** le cliquet d'accouplement (32) est monté sur le rotor (16) de manière à basculer sur une arête de palier (36), et le centre de gravité (S) du cliquet d'accouplement (32) par rapport au bord de palier (36) est choisi tel qu'au début de la rotation du rotor (16), le cliquet d'accouplement (32) est dévié par inertie de masse dans la position d'engagement.

2. Accouplement selon la revendication 1, **caractérisé en ce que** l'arête de palier (36) est formée sur le rotor (16) dans une poche de palier (30) recevant le cliquet d'accouplement (32).

3. Accouplement selon la revendication 1 ou 2, **caractérisé en ce que** le cliquet d'accouplement (32) présente à son extrémité détournée de la pointe du cliquet une entaille (38) dans laquelle s'engage l'arête de palier (36).

4. Accouplement selon la revendication 2 ou 3, **caractérisé en ce que** la poche de palier (30) présente des surfaces d'appui (34) sur lesquelles le cliquet d'accouplement (32) prend appui dans sa position d'engagement.

5. Accouplement selon la revendication 4, **caractérisé en ce que** les surfaces d'appui (34) absorbent des composantes de charge aussi bien radiales que périphériques.

6. Accouplement selon la revendication 4 ou 5, **caractérisé en ce que** sur la surface d'appui (34) est agencé au moins un élément de déformation (4) qui amortit le mouvement du cliquet d'accouplement (32) au contact avec la roue d'accouplement (24).

7. Accouplement selon la revendication 6, **caractérisé en ce que** l'élément de déformation est formé par une saillie (48) pointue sur la surface d'appui (34).

8. Accouplement selon la revendication 6 ou 7, **caractérisé en ce que** plusieurs éléments de déformation (48) sont agencés derrière l'arête de palier, à distance les uns des autres sur la surface d'appui (34) dans le sens de rotation du rotor (16).
